# EUROPEAN PATENT SPECIFICATION

(11) **EP 2 174 053 B1**
(45) Date of publication and mention of the grant of the patent: **18.04.2012**
(21) Application number: 08767346.3
(22) Date of filing: 11.06.2008
(51) Int. Cl.: F16L 37/14

(54) **QUICK CONNECTOR ELEMENT**
SCHNELLVERBINDERELEMENT
ELEMENT DE RACCORD RAPIDE

(30) Priority: 11.06.2007 TR 200704019
(43) Date of publication of application: 14.04.2010
(73) Proprietor: Teklas Kaucuk Sanayi Ve Ticaret A.S., 41480 Gebze Kocaeli (TR)
(72) Inventor: YALCIN, Murat, 41480 Gebze Kocaeli (TR); SONMEZ, Bekir, 41480 Gebze Kocaeli (TR); BOZKURTLU, Murat, 41480 Gebze Kocaeli (TR)
(74) Representative: Yavuzcan, Alev
(86) International application number: PCT/TR2008/000066
(87) International publication number: WO 2008/153510

(56) References cited:
- EP-A- 1 724 510
- WO-A-2006/040983
- WO-A-2007/036794
- DE-A1- 3 440 753
- DE-B3-102004 062 887
- US-A- 912 456
- US-A1- 2005 134 040

## Description

The present invention relates to a quick connector element which is used mainly during a fluid cycle to attach a hose or a flexible pipe to a rigid siphon manufactured from metal, plastic or other material, which can be easily mounted and locked thereon, maintaining an impermeable and sealed connection in locked position; which moreover constitutes a compact quick connector element easily and simply removable from the siphon in one single movement without having to employ an extra apparatus. This invention relates to a quick connector element employed particularly in automobile fuelling or cooling cycles.

### Prior Art

These quick connection elements, of which similar ones are used in automobile fuelling or cooling cycles, are firmly attached by the rear end to a hose or a flexible pipe. By mouth side, the quick connection elements lock onto a siphon manufactured out of rigid plastic or metal, enabling the fluid transfer between the hose or the flexible pipe and the siphon. Such quick connection elements have the particularity of being easily mountable onto a siphon and dismountable when desired, and additionally, of ensuring impermeability and not detaching off the siphon while in locked position. Mechanisms which enable a connection element to lock onto a siphon vary from one another in these connection elements which are basically composed of a hollow and a substantially cylindrical body, wherein are seated for impermeability function one or more O-rings generally together with one or more retaining rings to constitute an O-ring housing inside the body.

As also explained in the Patent Application No JP2005291405, the most widely-used state of the art embodiment employs a metal locker spring. In this system, there are two canals located oppositely on both sides of the lateral surface of the mouth side of the body whereby the siphon enters, each of which forming a segmental arch. A U-shaped metal spring is fixed topdown over the body in such a manner that the two legs fit into these canals on the body. When let loose, the legs of the spring draw closer together in the region where these canals are situated and constitute a wall between a bulge over the siphon and the mouth of the body; therefore when, after locking, the siphon is pulled outwards in an axial direction, the bulge over the siphon is blocked by the spring. If the siphon is desired to be detached from the connector element, the user needs simply to pull out the upper portion of the U-profile of the spring that overtops the body by using an instrument and freeing the spring legs off the canal, and thus the siphon can be dismounted. However, in this technique, the disconnection of the siphon requires inserting an instrument between the body and the fragment of the spring that overtops the body in order to pull out the spring and such manipulation is quite impractical inside a considerably narrow engine cabin.

As alternative to this solution, another locker mechanism which can be more easily mounted and dismounted is explained in the Patent Application No EP0605801. This technique comprises of two pairs of canals, each of which is a segmental arch, situated in such a way that the said canals face one another on the opposite sides and on top and bottom of the peripheral surface of the body mouth through which the siphon is inserted. The locker spring is manufactured from plastic material and can be described as two reversed V's with arms joined by the open sides. The two sides of the spring, where the arms join, also comprise legs projecting inwards and outwards. Because of this geometry, the locker spring contracts when pressed on the right and left sides, whereas pressure exerted by the top and bottom makes this spring expand and draw nearer to the circle of which the said locker spring constitutes the cross section. The locker spring is inserted inside the body through the canal located on top thanks to this contraction particularity produced by pressure on the sides. Once the siphon is installed, the legs projecting inwards on the sides constitute a wall between the locker bulge of the siphon and the mouth of the body, keeping the siphon from detaching. When the siphon is desired to be dismounted, pressing the locker element from above and below is sufficient in order to allow the cross section open sideward, and in this way the siphon is released. The first disadvantage of this method is that when dismounting the siphon is desired, the user must seize the body of the connector element from both above and below and press the said element; but often there is not enough space to plunge a hand fully inside quite narrow engine cabins. On the other hand, a secure installation of a locker spring inside the entire walls of the body mouth would necessitate a significant thickening over this section of the connector element, and such thickening of the said element, in addition to the previous one, brings forth the most important disadvantage.

Also in document WO 2007/036794 A a similar quick connection element is described.

In order to eliminate these disadvantages, the invention offers a locker mechanism which is much easier to open when desired yet maintaining extreme security while in locked position.

The object of the present invention is the realization of a compact locker mechanism enabling an impermeable locking of the connector element (1) when mounted onto the siphon (9), which will allow removal off the siphon (9) simply and easily in one single movement without necessitating any extra instrument or a larger space, and which, while achieving these results, will not constitute a negative contribution to the dimensions of the connection element.

The locker mechanism designed to fulfill the objective of the present invention is described in detail, with references to the annexed figures, on a connector element which has a single O-ring and a single retaining ring; this is exclusively for demonstrative purposes and does not restrict the scope of application to one single embodiment. On these figures:

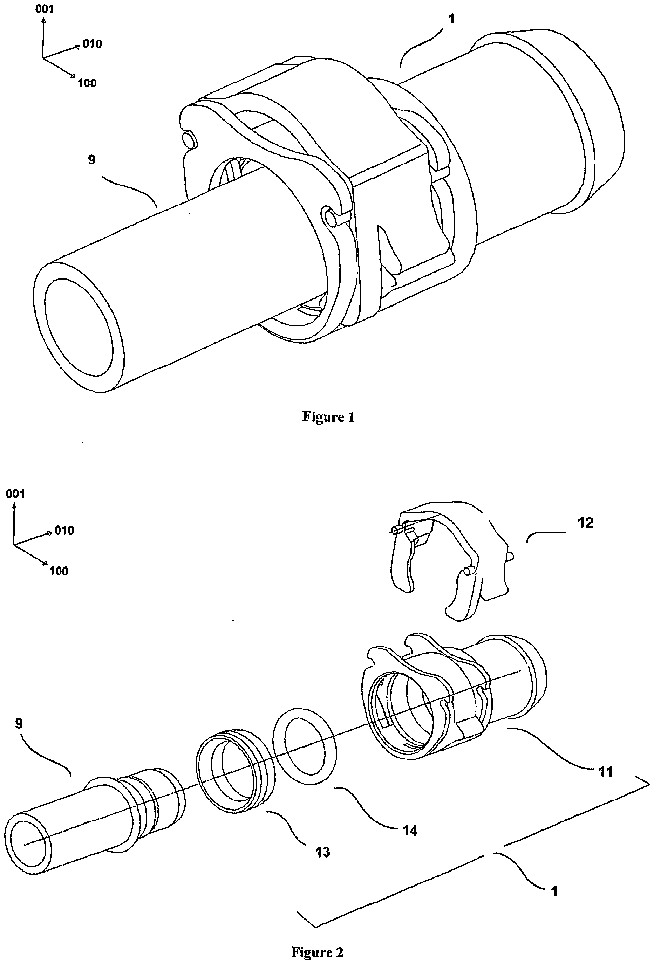

Figure 1, represents an isometric view of the connector element and the siphon in assembled position.
Figure 2, represents the view in Figure 1 burst open.

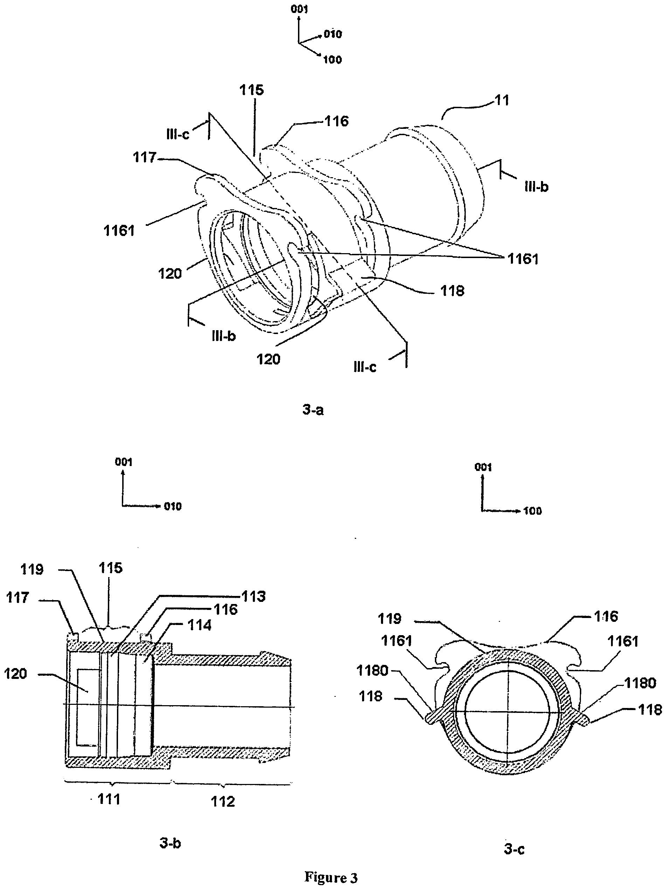

Figure 3, represents one isometric and two different cross sectional views of the body.

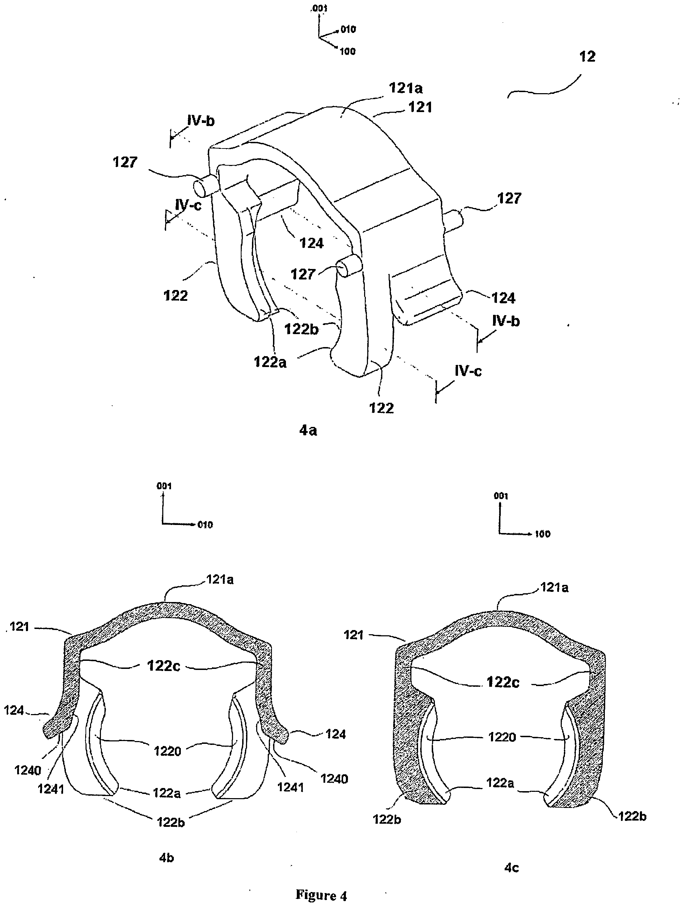

Figure 4, represents one isometric and two different cross sectional views of the locker spring.

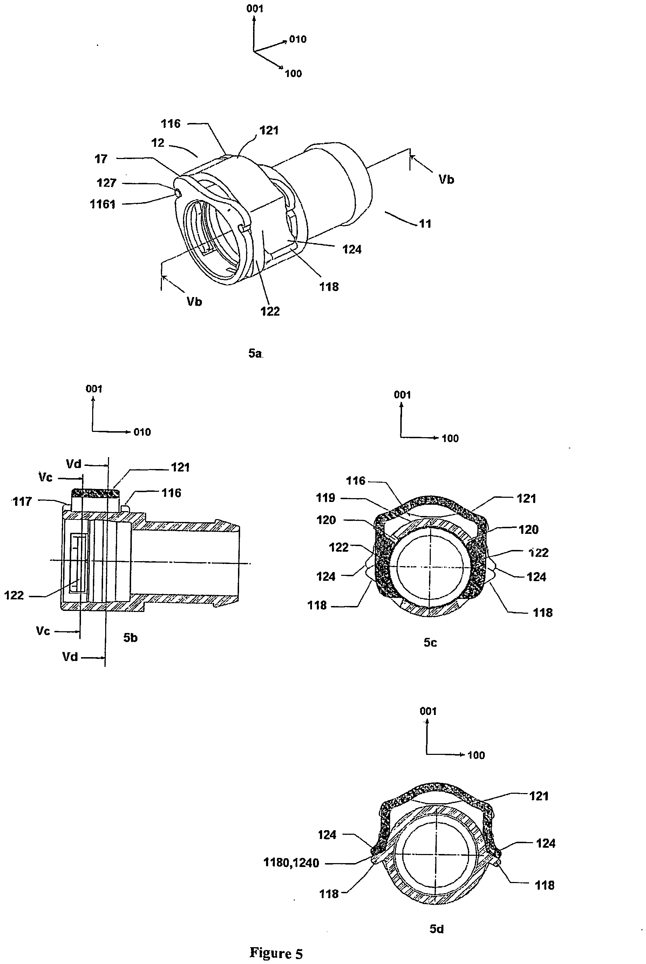

Figure 5, represents one isometric and three different cross sectional views of the locker spring mounted onto the body.

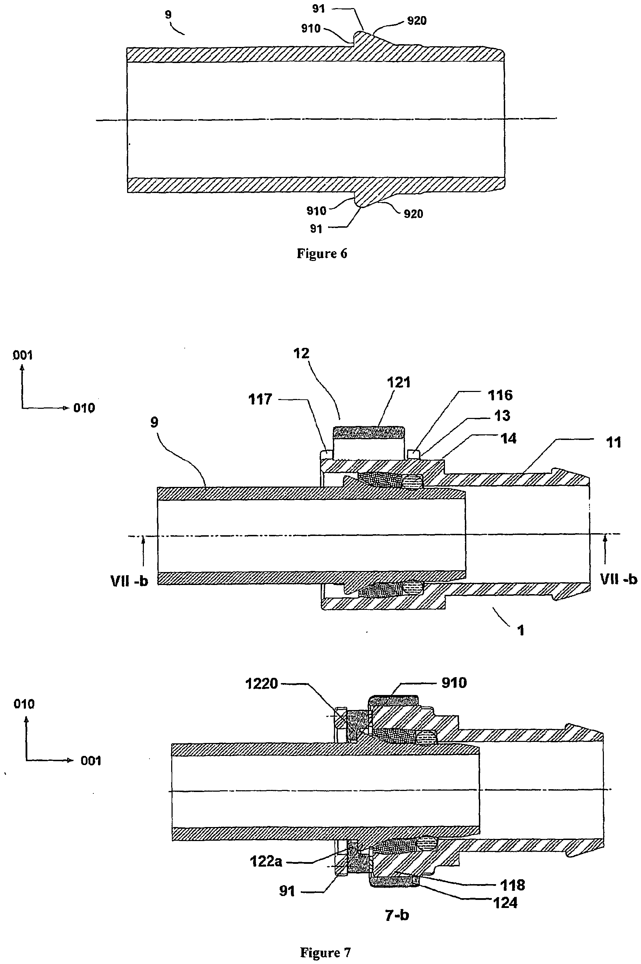

Figure 6, represents a cross sectional view of the siphon.
Figure 7, represents a cross sectional view of the connector element and the siphon assembled together.

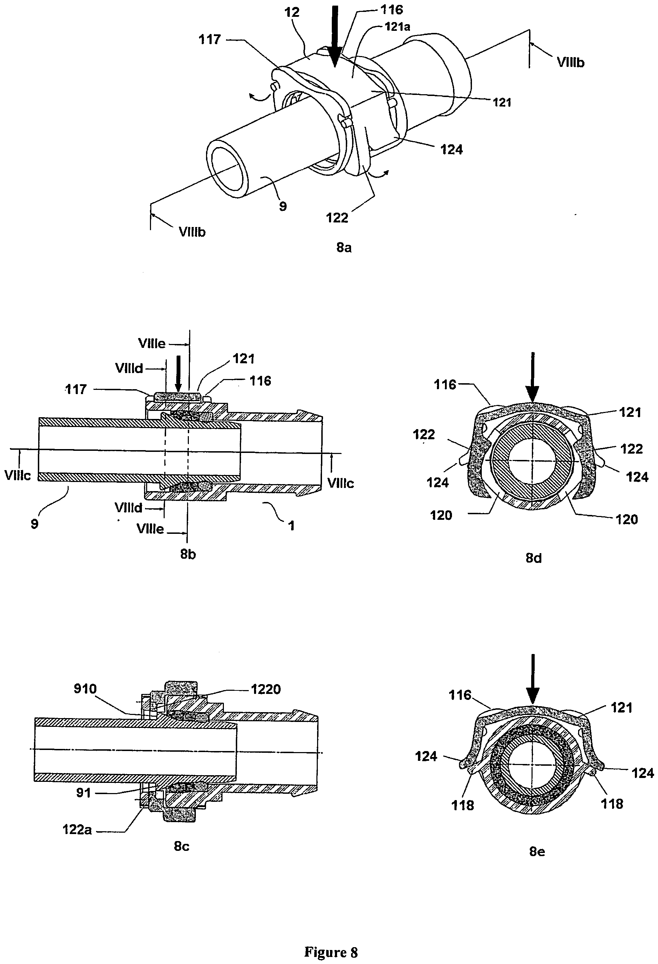

Figure 8, represents one isometric and one cross sectional view of the connector element and the siphon when the locker spring is in pressed (open) position.
Figure 9, represents one isometric and two cross sectional views of the body that can be employed in the second embodiment of the invention.

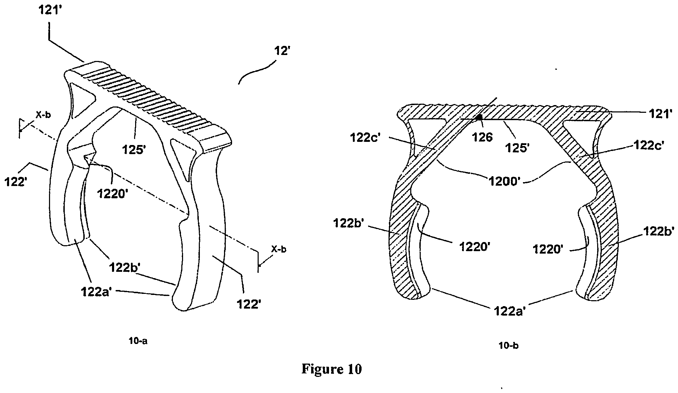

Figure 10, represents one isometric and one cross sectional view of the locker spring that can be employed in the second embodiment of the invention.

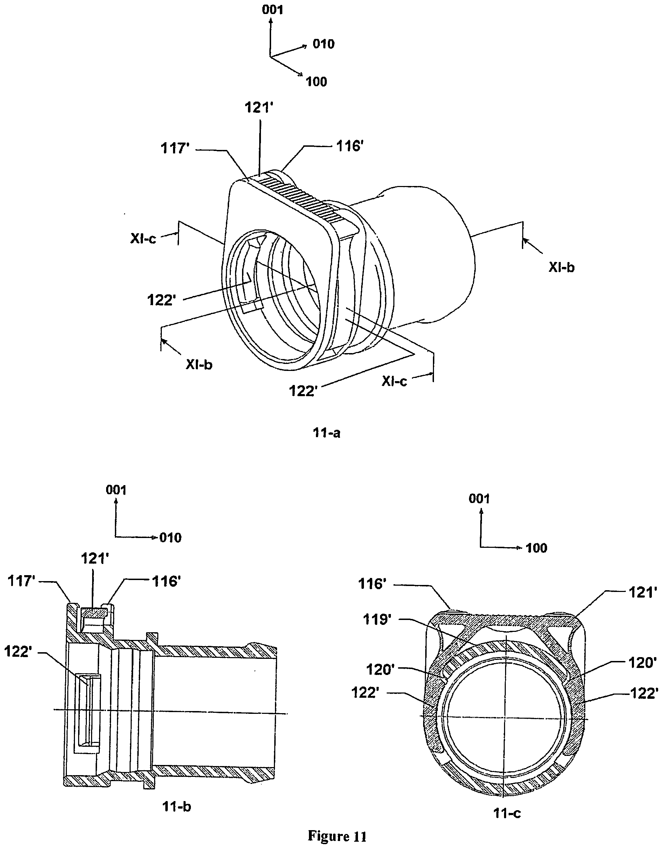

Figure 11, represents one isometric and three different cross sectional views of the locker spring mounted onto the body in the second embodiment of the invention.

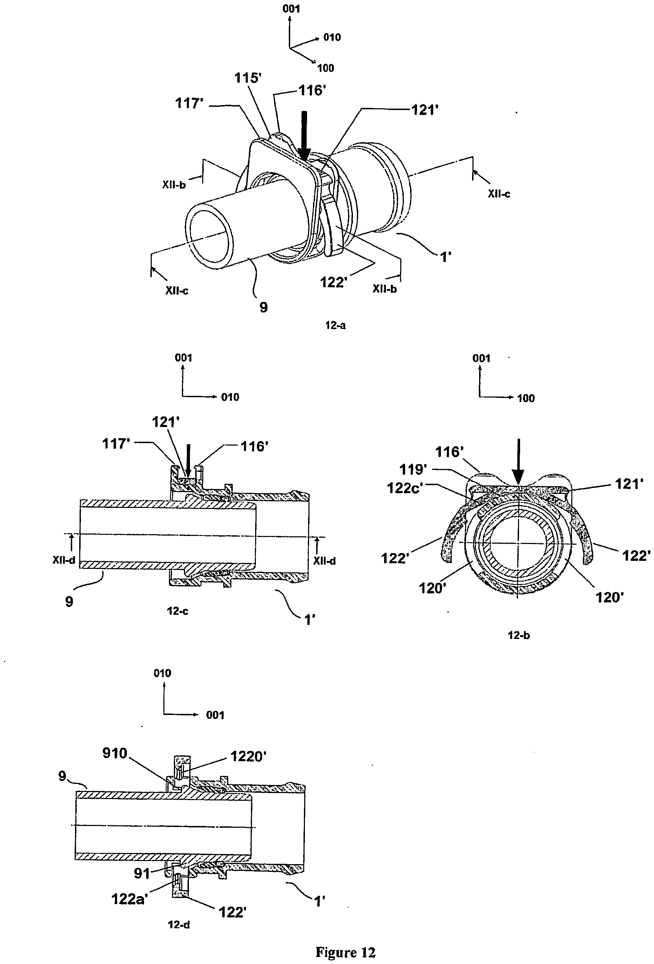

Figure 12, represents one isometric and one cross sectional view of the connector element and the siphon when the locker spring is in pressed (open) position in the second embodiment of the invention.

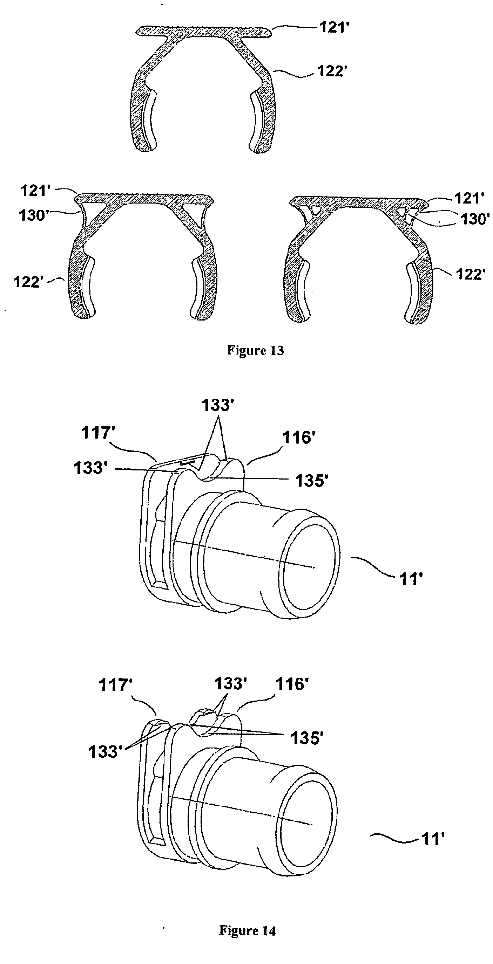

Figure 13, represents alternative locker springs that can be employed in the second embodiment of the invention.
Figure 14, represents alternative body types that can be employed in the second embodiment of the invention.

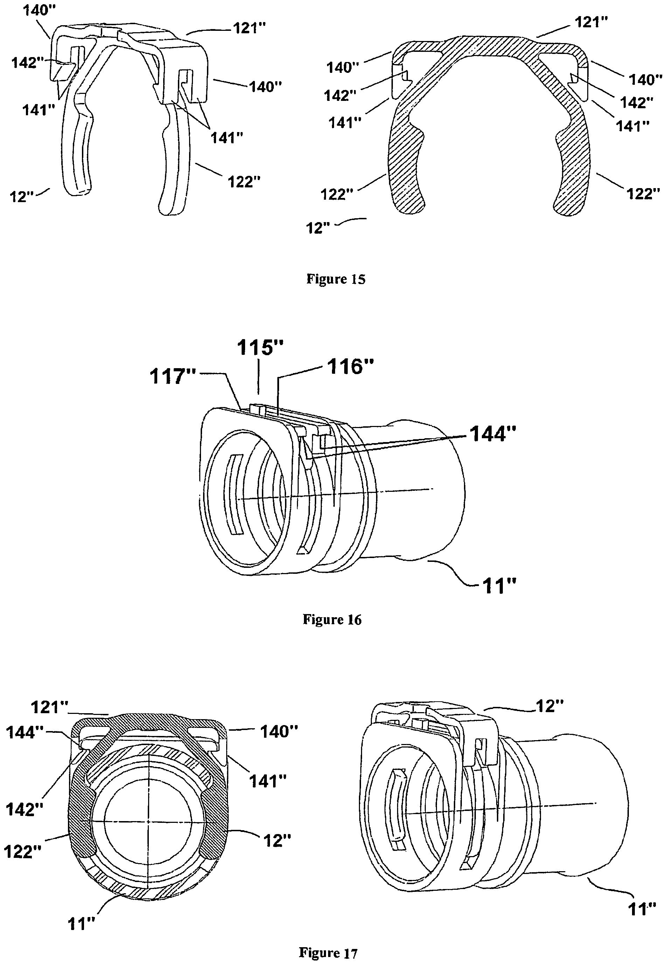

Figure 15, 16, 17, represent a third embodiment of the invention.

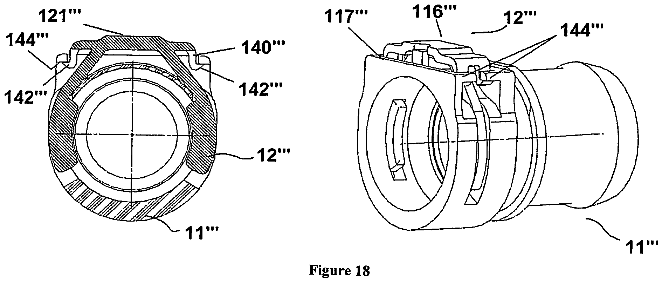

Figure 18, represents another embodiment of the invention.

### Detailed Description of the Invention

The quick connector element (1), wherein the locker mechanism constituting the object of the present invention is employed, comprises a hollow cylinder-shaped body (11), inside which (11) there is an O-ring (14) and a retaining ring (13) for impermeability purposes, and a locker spring (12) mounted from the exterior onto the body (11) to ensure the locking function.

The siphon (9) is a non-flexible component manufactured from metal or plastic material, preferably cylinder-shaped, and is fixed onto the motor block at a point located on the other side not shown on the figures. On the extremity attached to the connector element (1) the siphon (9) comprises a peripheral bulge (91) which enables the connector element (1) and the locker spring (12) to operate together. In order to facilitate installation, the front face (920) of the bulge that stands against the connector element has an inclination, whereas the back face (910) is perpendicular to the axis of the siphon (9).

The body (11) is preferably made out of plastic material and is composed of two fragments a longitudinal axis, the mouth fragment (111) and the tail fragment (112). The interior of the mouth fragment (111), through which the siphon (9) is installed, comprises at least one preferably two housings (113, 114), wherein a retaining ring (13) and a O-ring (14) are seated.

The exterior of the mouth fragment (111), on the other hand, comprises two extensions (116, 117) facing upwards (001) in order to constitute a housing (115) wherein the locker spring (12) is inserted. Preferably both but at least one side surface (100, -100) of these extensions (116, 117) comprise a notch (1161), one on each. Over the fragment that continues after the housing (115), said housing that stretches between two extensions (116, 117), there is at least one peripheral slot (120) located on the two side surfaces (100, -100) of the body (120). These slots (120) constitute each a segmental arch of 30 to 70 degrees.

The exterior of the mouth area (111) comprises a grade (118) on each of the two side surfaces (100, -100), located exclusively over the continuation part after the housing (115) in-between the extensions (116, 117). These grades (118) have the form of a bulge projecting out (100, -100) from the centre of the body (11) with a downward (-001) inclination.

The tail fragment (112) of the body is where a hose or a flexible pipe is fixed, and the external surfaces may of milled, ribbed or plain nature, depending on the assemblage method of the hose or flexible pipe.

The locker spring (12) comprises a carrier fragment (121) on top (001), wherefrom a locker leg (122) and a supporting ear (124) extend on both extremities, and is a flexible component disclosing an arc characteristic.

The carrier fragment (121) is large enough to fit inside the housing (115) over the mouth area of the body and comprises preferably a quadrangular cross section. In order to obtain a better pressure sensation, a curved line going upwards from the body traces the middle part, yet this line may just as well be a straight line.

A locker leg (122) and a supporting ear (124) next to one another stretch down from the two extremities of the carrier fragment (121).

The locker legs (122), wherefrom attached to the carrier fragment (121), follow first a straight (122c) then a curved line (122b), and the curved fraction (122b) comprises a bulge (122a) that projects towards the centre of the connector element.

After the plane fraction (122c) of the locker legs (122), the supporting ears (124) deviate and take the form of bulges stretching outwards (100, -100) in curve and, in axial direction, the said ears can be located either in front (010) of the curved fraction (122b) of the locker legs (122) or behind (-010) or both.

One side of the locker spring, preferably both sides, comprise at least one circular-sectioned bulge (127) lying in the same direction as the axis (010, 010) of the connector element, in order to keep the spring from slipping off the top and detaching while the spring is in stretched position.

The locker spring (12) is installed onto the body (11) in such a way that the two legs (122) stay on one side of the body axis (100, -100). At assembled position, the carrier fragment (121) of the locker spring (12) sits inside the housing (115) on the top surface of the body, while the locker legs (122) enter inside the slots (120) on the two side surfaces of the body. At this position, the bottom surfaces (1240) of the supporting ears (124) of the locker spring (12) are seated totally against the top surfaces (1180) of the bulges-like grades (118) of the body.

When the connector element (1) is installed onto the siphon (9), the bulge (122a) on the locker spring (12) legs (122) acts jointly with the bulge (91) situated over the exterior surface of the siphon (9), and this joint action ensures the interlocking of the connector element (1) with the siphon (9). At this position, the interior surface (1220) of the bulge (122a) over the locker leg (122) is face-to-face with the plane surface (910) of the bulge (91) of the siphon and holds the connector element (1) from detaching off the siphon (9) in spite of axial charges thereon.

Also, in assembled position, the circular bulges (127) over the locker spring (12) are seated inside the notches (1161) situated over the two sides of the extensions (116, 117) on the body (11). Such arrangement prevents the locker spring (12), under frontal tension during assembled position, to strip and detach off the top of the body.

To remove the connector element (1) out of the siphon (9), the user simply needs to exert a vertical pressure over the upper surface (121a) of the carrier fragment (121) of the locker spring (12). Under the impact of pressure, the carrier fragment (121) descends lower while the supporting ears (124) of the locker spring (12) slide over the ears (118) of the body (11), with which the said supporting ears are in face-to-face contact, expanding downward and towards the two sides. At the same time, the supporting ears (124) and the locker legs (122) which constitute a single piece above (122c) start stretching to the two sides, and the bulge (122a) over the locker legs breaks out of the bulge (91) of the exterior surface of the siphon (9), letting the siphon (9) free. At this position, the quick connector element (1) is turned in axial direction over the siphon (9) and is easily pulled out.

In this embodiment of the invention, the principle is that pressure (-001) exerted upon the locker spring (12) from above forces the locker legs (122) to open to the two sides (100, -100) and change direction thanks to the grades and ears (118, 124) that are located over the body (11) and the locker spring (12) and that are touching one another. When mounted onto the siphon (9), the connector element (1) ensures therefore an impermeable connection and prevents detachment from the siphon under the impact of axial charges, whereas one mild thumb pressure from above is sufficient when dismounting is desired. The said connector element is therefore quite suitable for use inside narrow motor cabins, has got small dimensions, and maintains an extremely secured connection in locked position despite being very easily dismountable.

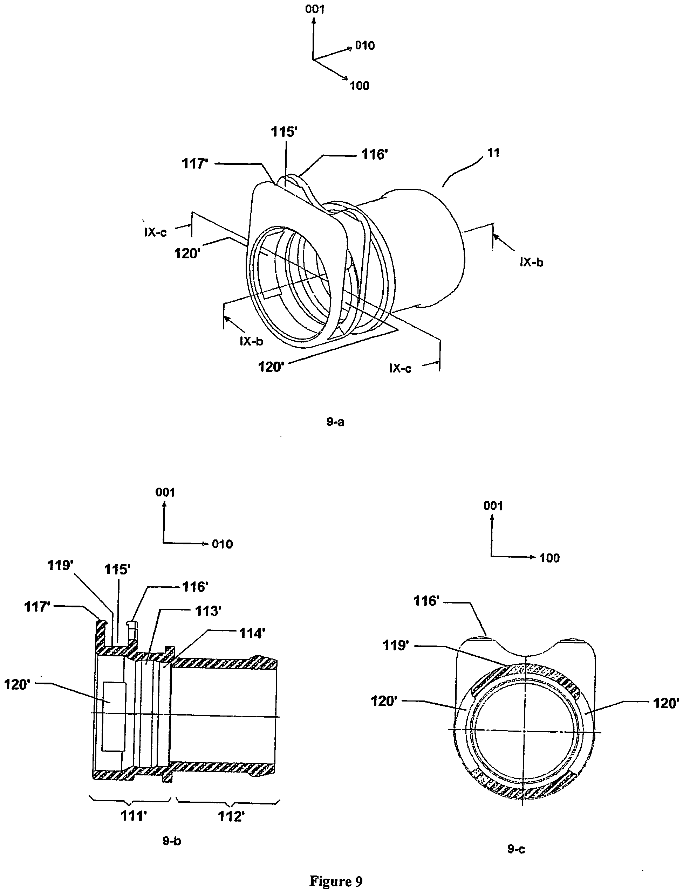

As observed on Figure 9, in a second embodiment of the invention, the body (11') and the locker spring (12') do not comprise any grades or ears (118, 124). Instead, the opening of the locker legs (122') to the two sides is obtained by the plane surface (122c') of the locker spring (12') which makes a tangent wise expansion towards the curved top surface (119') of the body (11').

In this embodiment, the locker legs (122') connect to the carrier fragment (121') forming preferably an acute angle (126'); and in assembled position, the plane fraction (122c') of the locker legs (122') is tangent to the curved top surface (119') of the body which constitutes the base of the housing (115') that lies between the extensions (116', 117'), wherein the spring is seated.

When, in order to remove the connector element (1') off the siphon (9), a vertical pressure is exerted over the carrier fragment (121') of the locker spring (12'), the carrier fragment (121') descends downwards while the plane fragment (122c') of the locker legs (122') expands tangent wise towards the curved top surface (119') of the body and opens to the two sides. The straight surface (1220') of the bulge (122a') on the locker legs (122') separates from the straight surface (910') of the bulge (91) of the siphon, and therefore, the connector element (1') can easily be pulled off the siphon (9) in axial direction.

To achieve the required frontal tension for the locker spring (12') while mounted onto the siphon (9) and at closed position, the locker legs (122') and the carrier fragment (121') can be joined through bridges (130') at one or several points.

In view of preventing the locker spring (12') from stripping and detaching over the top of the body (11') due to frontal tension in assembled position, the extremities of the extensions (116', 117') over the body, which constitute the housing (115') wherein the spring (12') is seated, comprise claws (133'). These claws (133') restrain the carrier fragment (121') of the locker spring (12') from above and keep the said fragment from stripping off the body (11'). One or both of the extensions (116', 117') of the body (11') may also comprise one or several holes (135') in order to allow some space to insert a finger to press open the locker spring (12').

In another alternative embodiment, the connector mechanism that constitutes the object of this invention comprises at least one preferably two extensions (140") turned downwards on both sides of the carrier fragment (121") of the locker spring (12"). These extensions (140") are fork-shaped and the extremities (141") turn inwards composing a claw (142") structure. In this alternative employment, the carrier fragment (121") is not seated inside the housing (115") formed by the extensions (116, 117") on the body (11") but sits over the extensions (116", 117"). The extremities of each of the two extensions (116", 117") comprise a notch (144"), and in assembled position, the claw (142") over the fork-shaped extremity (141") of the carrier fragment (121") of the locker spring (12") fits inside this notch (144"), preventing the locker spring (12") to strip off the top of the body (11 ") under the impact of frontal tension.

In one other alternative embodiment of the connector mechanism that constitutes the object of the invention, the carrier fragment (121"') of the locker spring (12"') also comprises two extensions (140"') turned downwards on the two sides. In this embodiment, the claws (142"') over the extremities of the fork-shaped extensions (141"') turn outwards. The body (11") is provided with notches (144"') facing one another on the extremities of both of the extensions (116"', 117"') wherein the carrier fragment (121"') of the locker spring (12"') is seated. In assembled position, the outward-turned claw (142"') over the fork-shaped extremity (141"') of the carrier fragment (121"') of the locker spring (12"') sits inside this notch (144"'), keeping the locker spring (12"') under frontal tension from stripping off over the top of the body (11"').

The top surface (121 a, 121 a', 121 a", 121a"') of the carrier fragment (121, 121', 121 ", 121"'), whereupon pressure is exerted, may have a notched structure.

## Claims

1. A quick connector element (1) comprising a cylindrical body (11), wherein there is at least one O-ring (14) and a retaining ring (13) for impermeability purposes, and a locker spring (12) mounted externally onto the housing (115) that the said body includes; which interlocks immediately with the counterpart piece (9) once assembled, but is easily dismountable from that same piece (9) thanks to the impact of pressure exerted onto one single point of the said locker spring (12), which (12) leaning against the said body (11), expands and opens, **wherein** there are bulge-like grades (118) stretching with a downward inclination (-001) on one or both of the side faces (100, -100) over the continuation of the said housing (115), and which serve as support basis for the spring (12) to expand as much as desired when pressure is exerted thereon (12) **and** the locker spring (12), **which** is a flexible component disclosing an arc characteristic, comprises a carrier fragment (121) on top (001), wherefrom a locker leg (122) and a supporting ear (124) extend on both extremities, **characterized in that in the assembled position,** the bottom surfaces (1240) of the said supporting ears (124) of the locker spring (12) are seated totally against the top surfaces (1180) of the bulge-like grades (118) of the body.

2. Quick connector element in Claim 1, wherein the said housing (115) is obtained by forming two extension pieces (116, 117) facing upwards (001) over the mouth side (111) of the body.

3. Quick connector element in Claim 2, wherein there is a notch (1161) over the surface of the said extension piece (116, 117).

4. Quick connector element in Claim 1, which comprises a peripheral slot (120) on the extension of the said housing (115) over the side face of the body (11).

5. Quick connector element in Claim 1, wherein there are two of the said peripheral (120) slots, each constituting a segmental arch on each side surface of the body.

6. Quick connector element in Claim 1, wherein the locker legs (122) stretch downwards and are adjacent to the carrier fragment (**121**).

7. Quick connector element in Claim **6,** wherein the said locker spring (12) comprises bulges (127) that fit inside the notches (1161) situated over the two sides of the extensions (116, 117) on the body (11) so that the spring will be held from slipping off the top of the body.

8. Quick connector element in Claim **6,** wherein the said locker legs (122) comprise a bulge (122a) stretching towards the centre of the connector element.

9. Quick connector element in Claim 1, wherein the locker legs (122') of the locker spring (12') connect to the carrier fragment (121'), preferably in an acute angle (126'), and, when connected thereto, the plane fragment (122c') thereof (122') is tangent to the curved top surface (119') of the body between the extensions (116', 117') that constitute the base of the housing (115') wherein the spring enters.

10. Quick connector element in Claim **8,** wherein the locker legs (122') and the carrier fragment (121') of the locker spring (12') connect to one another through bridges (130') at one or several points.

11. Quick connector element in Claim **8,** wherein the extensions (116', 117') which constitute the housing (115') over the body comprise claws (133') at the extremities in order to prevent the locker spring (12') detach off the housing (115') where the said locker spring is seated.

12. Quick connector element in Claim **9,** wherein the carrier fragment (121") of the locker spring (12") comprises on both sides at least one preferably two fork-shaped extensions (140") turned downwards, with the extremities of the said forks (141") turned inwards so as to constitute a claw (142") structure.

13. Quick connector element in Claim **12,** wherein the said claws (142") are seated inside notches (144") at the extremities of the extensions (116", 117") of the body (11") in order to prevent the locker spring (12") to strip off the top of the said body (11").

14. Quick connector element in Claim **13,** wherein the carrier fragment (121"') of the locker spring (12"') comprises at least one preferably two fork-shaped extensions (140"') on both sides, turned downwards, with the extremities (141"') of the said forks turned outwards so as to constitute a claw (142"') structure.

15. Quick connector element in Claim **14,** wherein the said claws (142"') are seated inside notches (144) facing one another at the extremities of the extensions (116"', 117"') on the body (11"') in order to prevent the locker spring (12") to strip off the top of the said body (11"').

16. Quick connector element in Claim 1 to Claim **14,** in which the top of the extensions (116, 117; 116'; 117'; 116", 117"; 116"', 117"') that constitute the said housing (115, 115', 115") comprises a hole in order to allow enough space for a finger to lean easily therein.

## Patentansprüche

1. Schnellanschlusselement (1), umfassend einen zylindrischen Körper (11) mit wenigstens einem O-Ring (14) und einem Haltering (13) zu Zwecken der Dichtheit, und eine Verrieglungseder (12), die extern an dem Gehäuse (115) angebracht ist, das der Körper (11) aufweist, und die nach dem Zusammenbau sofort mit dem Gegenstück (9) eine Verriegelung eingeht, aber durch die Auswirkung von Druck, der auf einen einzelnen Punkt der Verrieglungsfeder (12) ausgeübt wird von dem Stück (9) leicht lösbar ist, indem sie (12) sich an den Körper (11) lehnt, sich aufweitet und sich öffnet, **wobei** wölbungsartige Oberflächenkanten (118) vorhanden sind, die sich mit einer Abwärtsneigung (-001) an einer oder beiden Seitenflächen (100, -100) über die Fortsetzung des Gehäuses (115) erstreckt, und die als Stützbasis für die Feder (12) dienen, damit diese sich so weit wie gewünscht aufweitet, wenn Druck darauf (12) ausgeübt wird, **und** wobei die Verrieglungsfeder (12), **die** ein flexibles Bauteil ist, eine Bogeneigenschaft aufweist und ein Trägerfragment (121) auf der Oberseite (001) umfasst, von dem aus sich ein Verrieglungsbein (122) und eine Stützlasche (124) an beiden Extremitäten erstrecken, **dadurch gekennzeichnet, dass in der zusammengebauten Position** die Unterflächen (1240) der Stützlaschen (124) der Verrieglungsfeder (12) vollständig an den Oberflächen (1180) der wölbungsartigen Oberflächenkanten (118) des Körpers (11) ruhen.

2. Schnellanschlusselement (1) nach Anspruch 1, wobei das Gehäuse (115) durch Ausbilden von zwei Verlängerungsstücken (116, 117) erlangt wird, die über der Öffnungsseite (111) des Körpers (11) nach oben (001) gewandt sind.

3. Schnellanschlusselement (1) nach Anspruch 2, wobei über der Fläche des Verlängerungsstücks (116, 117) eine Kerbe (1161) vorhanden ist.

4. Schnellanschlusselement (1) nach Anspruch 1, das an der Verlängerung des Gehäuses (115) einen Umfangsschlitz (120) über der Seitenfläche des Körpers (11) umfasst.

5. Schnellanschlusselement (1) nach Anspruch 1, wobei zwei der Umfangsschlitze (120) vorhanden sind, die jeweils einen Segmentbogen an jeder Seitenfläche des Körpers (11) bilden.

6. Schnellanschlusselement (1) nach Anspruch 1, wobei die Verriegelungsbeine (122) sich nach unten und benachbart zum Trägerfragment (121) erstrecken.

7. Schnellanschlusselement (1) nach Anspruch 6, wobei die Verriegelungsfeder (12) Wölbungen (127) aufweist, die in die Kerben (1161) passen, die über den zwei Seiten der Verlängerungen (116, 117) am Körper (11) angeordnet sind, so dass die Feder (12) daran gehindert wird, von der Oberseite des Körpers (11) zu rutschen.

8. Schnellanschlusselement (1) nach Anspruch 6, wobei die Verriegelungsbeine (122) eine Wölbung (122a) umfassen, die sich zur Mitte des Anschlusselements (1) hin erstreckt.

9. Schnellanschlusselement (1) nach Anspruch 1, wobei sich die Verriegelungsbeine (122') der Verriegelungsfeder (12') vorzugsweise in einem spitzen Winkel (126') mit dem Trägerfragment (121') verbinden und, wenn sie damit verbunden sind, das ebene Fragment (122c') desselben (122') tangential zur gekrümmten Oberfläche (119') des Körpers (11') zwischen den Verlängerungen (116', 117') ist, die die Basis des Gehäuses (115') bilden, wo die Feder (12') eintritt.

10. Schnellanschlusselement (1) nach Anspruch 8, wobei die Verriegelungsbeine (122') und das Trägerfragment (121') der Verriegelungsfeder (12') an einem oder mehreren Punkten über Brücken (130') miteinander verbunden sind.

11. Schnellanschlusselement (1) nach Anspruch 8, wobei die Verlängerungen (116', 117'), die das Gehäuse (115') über dem Körper (11') ausmachen, Klauen (133') an den Extremitäten umfassen, um zu verhindern, dass sich die Verriegelungsfeder (12') vom Gehäuse (115') löst, wo die Verriegelungsfeder (12') sitzt.

12. Schnellanschlusselement (1) nach Anspruch 9, wobei das Trägerfragment (121") der Verriegelungsfeder (12") an beiden Seiten wenigstens eine und vorzugsweise zwei gabelförmige Verlängerungen (140") umfasst, die nach unten gewandt sind, wobei die Extremitäten der Gabeln (141") nach innen gewandt sind, derart, dass sie eine Klauenstruktur (142") bilden.

13. Schnellanschlusselement (1) nach Anspruch 12, wobei die Klauen (142") in Kerben (144") an den Extremitäten der Verlängerungen (116", 117") des Körpers (11") sitzen, um zu verhindern, dass die Verriegelungsfeder (12") von der Oberseite des Körpers (11 ") abgestreift wird.

14. Schnellanschlusselement (1) nach Anspruch 13, wobei das Trägerfragment (121"') der Verriegelungsfeder (12"') an beiden Seiten wenigstens eine und vorzugsweise zwei gabelförmige Verlängerungen (140"') umfasst, die nach unten gewandt sind, wobei die Extremitäten der Gabeln (141"') nach außen gewandt sind, derart, dass sie eine Klauenstruktur (142"') bilden.

15. Schnellanschlusselement (1) nach Anspruch 14, wobei die Klauen (142'") in einander gegenüberliegenden Kerben (144"') an den Extremitäten der Verlängerungen (116"', 117"') des Körpers (11"') sitzen, um zu verhindern, dass die Verriegelungsfeder (12"') von der Oberseite des Körpers (11"') abgestreift wird.

16. Schnellanschlusselement (1) nach Anspruch 1 bis 14, wobei die Oberseite der Verlängerungen (116, 117; 116', 117'; 116", 117"; 116"', 117"'), die das Gehäuse (115, 115', 115") ausmachen, eine Öffnung umfassen, die genug Platz bietet, um ohne Weiteres einen Finger darin aufzunehmen.

## Revendications

1. Un élément de raccordement rapide (1) comprenant un corps cylindrique (11), dans lequel il y a au moins un anneau torique (14) et un anneau de retenue (13) pour l'imperméabilité, et un ressort de blocage (12) monté extérieurement sur le logement (115) que ledit corps (11) comporte; qui s'enclenche immédiatement avec l'élément homologue (9) une fois assemblé, mais qui peut être facilement démonté dudit élément (9) grâce à la pression appliquée sur un seul point dudit ressort de blocage (12) qui (12) s'étend et s'ouvre en s'appuyant sur ledit corps (11), **où** il y a des pentes en forme de bosse (118) s'étendant avec une inclinaison vers le bas (-001) sur une ou deux des faces latérales (100, -100) sur la suite dudit logement (115), et qui servent comme des bases de soutien pour que le ressort (12) s'étend autant que désiré lorsque la pression est exercée sur celui-ci (12) **et** le ressort de blocage (12), **qui** est un élément flexible en forme d'arc, comprend une partie de support (121) sur le dessus (001), de laquelle un pied de blocage (122) et un ergot de support (124) s'étendent sur les deux extrémités, **caractérisé en ce que dans la position assemblée**, les surfaces inférieures (1240) desdits ergots de support (124) dudit ressort de blocage (12) s'appuient totalement sur les surfaces supérieures (1180) des pentes en forme de bosse (118) du corps (11).

2. Un élément de raccordement rapide (1) selon la Revendication 1, où ledit logement (115) est produit en formant deux pièces d'extension (116, 117) qui font face vers le haut (001) sur la bouche (111) du corps (11).

3. Un élément de raccordement rapide (1) selon la Revendication 2, où il y a une encoche (1161) sur la surface de ladite pièce d'extension (116, 117).

4. Un élément de raccordement rapide (1) selon la Revendication 1, qui comprend une fente périphérique (120) sur l'extension dudit logement (115) sur la face latérale du corps (11).

5. Un élément de raccordement rapide (1) selon la Revendication 1, où il y a deux desdites fentes périphériques (120), chacune formant un arc segmentaire sur chaque surface latérale du corps (11).

6. Un élément de raccordement rapide (1) selon la Revendication 1, où les pieds de blocage (122) s'étendent vers le bas et sont adjacents à la partie de support (121).

7. Un élément de raccordement rapide (1) selon la Revendication 6, où ledit ressort de blocage (12) comprend des bosses (127) qui vont dans les encoches (1161) situées sur les deux côtés des extensions (116, 117) sur le corps (11) de telle sorte que le ressort (12) est empêché de glisser de la partie supérieure du corps (11).

8. Un élément de raccordement rapide (1) selon la Revendication 6, où lesdits pieds de blocage (122) comprennent une bosse (122a) qui s'étend vers le centre de l'élément de raccordement (1).

9. Un élément de raccordement rapide (1) selon la Revendication 1, où les pieds de blocage (122') du ressort de blocage (12') sont raccordés à la partie de support (121') de préférence dans un angle aigu (126'), et, lorsqu'ils sont raccordés à celle-ci, la partie plane (122c') de ceux-là (122') est tangente à la surface courbe supérieure (119') du corps (11') entre les extensions (116', 117') qui forment la base du logement (115') dans lequel le ressort (12') entre.

10. Un élément de raccordement rapide (1) selon la Revendication 8, où les pieds de blocage (122') et la partie de support (121') du ressort de blocage (12') sont raccordés l'un à l'autre par des ponts (130') à un ou plusieurs points.

11. Un élément de raccordement rapide (1) selon la Revendication 8, où les extensions (116', 117') qui forment le logement (115') sur le corps (11') comprennent des crochets (133') aux extrémités afin d'empêcher le ressort de blocage (12') de se détacher du logement (115') où ledit ressort de blocage (12') est placé.

12. Un élément de raccordement rapide (1) selon la Revendication 9, où la partie de support (121") du ressort de blocage (12") comprend sur les deux côtés au moins une, de préférence deux extensions en forme de fourche (140") tournées vers le bas, avec les extrémités desdites fourches (141") tournées vers l'intérieur de manière à constituer une crochet (142").

13. Un élément de raccordement rapide (1) selon la Revendication 12, où lesdites crochets (142") sont placées dans des encoches (144") aux extrémités des extensions (116", 117") du corps (11") afin d'empêcher le ressort de blocage (12") d'enlever de la surface supérieure dudit corps (11").

14. Un élément de raccordement rapide (1) selon la Revendication 13, où la partie de support (121"') du ressort de blocage (12"') comprend au moins une, de préférence deux extensions en forme de fourche (140"') tournées vers le bas sur les deux côtés, avec les extrémités (141"') desdites fourches tournées vers l'extérieur de manière à constituer une crochet (142"').

15. Un élément de raccordement rapide (1) selon la Revendication 14, où lesdites crochets (142"') sont placées dans des encoches (144"') faisant face les unes aux autres aux extrémités des extensions (116"', 117"') sur le corps (11"') afin d'empêcher le ressort de blocage (12"') d'enlever de la surface supérieure dudit corps (11"').

16. Un élément de raccordement rapide (1) selon les revendications de 1 à 14, dans lequel la surface supérieure des extensions (116, 117; 116', 117'; 116", 117"; 116"', 117"') qui forment ledit logement (115, 115', 115") comprend un trou afin de fournir assez espace pour qu'un doigt s'appuie facilement dans celui-ci.
